# EUROPEAN PATENT APPLICATION

(11) **EP 4 760 962 A1**
(43) Date of publication of application: **17.06.2026**
(21) Application number: 25841521.5
(22) Date of filing: 04.07.2025
(51) Int. Cl.: H01M 50/505, H01R 25/16

(54) **BUSBAR AND BATTERY PACK INCLUDING SAME BUSBAR**

(30) Priority: 17.07.2024 KR 20240094540
(71) Applicant: LG Energy Solution, Ltd., Seoul 07335 (KR)
(72) Inventor: SON, Hong Se, Daejeon 34122 (KR); KWON, Hee Yong, Daejeon 34122 (KR); AN, Seong Woo, Daejeon 34122 (KR)
(74) Representative: BCKIP Part mbB
(86) International application number: PCT/KR2025/009593
(87) International publication number: WO 2026/019125

(57) **Abstract**

Disclosed is a busbar including a busbar body configured in a structure in which a plurality of conductive layers is stacked, fusion portions coupled to both ends of the busbar body, the fusion portions being configured to fix the plurality of conductive layers, and an insulating layer included on at least a part of an outer surface of the busbar body, wherein the plurality of conductive layers is connected to each other only at the fusion portions.

## Description

### [Technical Field]

This application claims the benefit of priority to Korean Patent Application No. 2024-0094540 filed on July 17, 2024, the disclosure of which is incorporated herein by reference in its entirety.

The present invention relates to a busbar and a battery pack including the busbar. More particularly, the present invention relates to a busbar capable of electrically connecting a plurality of electrical components formed so as to have various sizes to each other while preventing the occurrence of wasted space when the electrical components are stacked in a battery pack so as to have various shapes in a height direction or a width direction and a battery pack including the busbar.

### [Background Art]

With the strengthening of carbon emission regulations, the demand for eco-friendly energy is increasing, and the number of apparatuses using lithium secondary batteries as an energy source is increasing.

Thereamong, lithium secondary batteries are increasingly being assembled into battery modules and battery packs even in fields that require high-output and high-capacity energy sources, such as electric vehicles.

In general, a battery pack is manufactured by receiving a battery cell stack including a plurality of battery cells disposed in tight contact with each other so as to be connected in series and/or parallel in a pack case and assembling the same, and the battery pack may be designed considering the required capacity and output for a device to which the battery pack is applied.

If only battery modules of a fixed size are used or the battery modules are disposed only in a specific orientation when manufacturing a high-capacity battery pack, it may be difficult to manufacture a desired high-capacity battery pack.

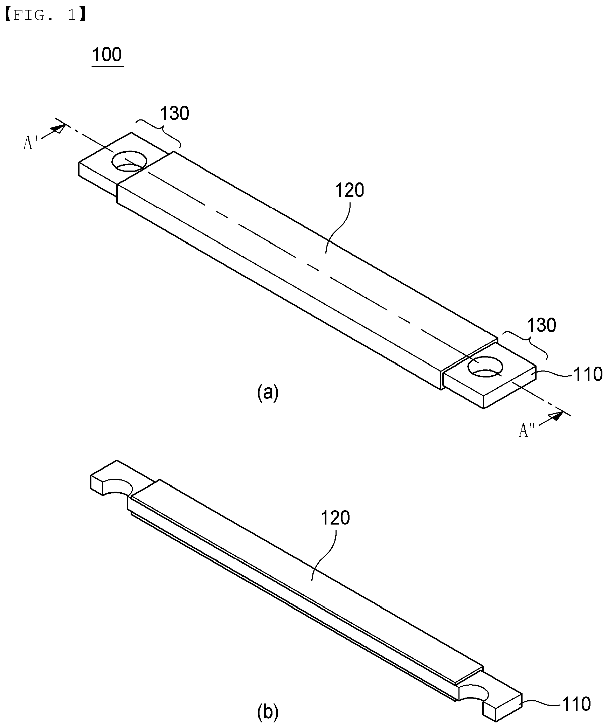

FIG. 1 is a perspective view and a sectional view of a conventional busbar.

Referring to FIG. 1, (a) is an overall perspective view of the busbar, and (b) is a sectional perspective view of the busbar taken along line A'-A" of (a). The busbar 100 includes a busbar body 110 made of a conductive material, coupling portions 130 located respectively at both ends of the busbar body 110, and an insulating layer 120 added to the remaining part of the busbar body 110 excluding the coupling portions 130. Referring to (b), since the busbar body 110 is configured in the form of a single metal bar, deformation, such as bending or twisting, of the busbar 100 is difficult.

When battery modules are connected to each other using a busbar having a uniform thickness and a fixed shape, if the battery modules or electrical components are not stacked in a battery pack so as to have a standardized shape, a large number of busbars may be required to connect the battery modules, making it difficult to efficiently use an inner space of the battery pack. As a result, the inner space of the battery pack may be unnecessarily wasted and not used to increase capacity.

If the wasted space can be reduced and the space occupied by battery modules in the battery pack can be increased, it is possible to manufacture a larger-capacity battery pack, and therefore a need has arisen for a busbar that can be freely bent or variously deformed.

Patent Document 1 relates to a flexible busbar and a method of manufacturing the same, wherein the flexible busbar includes a conductor portion configured such that a plurality of metal plates is stacked, a first terminal portion and a second terminal portion located at both ends of the conductor portion in a longitudinal direction, and an insulating resin coating layer applied to an outer circumferential surface of the conductor portion.

The method of manufacturing the flexible busbar disclosed in Patent Document 1 includes stacking a plurality of metal plates, applying an insulating resin to surfaces of the metal plates excluding both edges thereof, fixing one edge of each of the metal plates, machining the metal plates into a predetermined shape, and fixing the other edge of each of the metal plates.

Patent Document 2 relates to a flexible busbar, wherein the flexible busbar includes a conductor portion configured such that a plurality of plate-shaped conductors is stacked, terminal portions formed at both ends of the conductor portion in a longitudinal direction, and a tube member configured to wrap a predetermined part of the conductor portion.

A method of manufacturing the flexible busbar disclosed in Patent Document 2 includes stacking plate-shaped conductors, welding a first terminal portion to one end of each of the plate-shaped conductors in the longitudinal direction, covering the plate-shaped conductors, bending the covered conductor portion into a specific shape, and welding a second terminal portion to the other end of each of the plate-shaped conductors in the longitudinal direction.

In the flexible busbars of Patent Document 1 and Patent Document 2, as described above, a finished product is manufactured by deforming the conductor portion into a specific shape during the manufacturing process, and therefore it is possible to manufacture a flexible busbar having a specific shape; however, it is difficult to deform the flexible busbar so as to be usable in various environments to which the flexible busbar is applied.

Therefore, there is a high demand for a busbar that can be easily deformed as needed so as to be coupled to terminals of battery modules variously disposed in a battery pack.

### (Prior Art Documents)

(Patent Document 1) Korean Patent Application Publication No. 2021-0053531 (2021.05.12)
(Patent Document 2) Korean Patent Application Publication No. 2020-0116880 (2020.10.13)

### [Disclosure]

### [Technical Problem]

The present invention has been made in view of the above problems, and it is an object of the present invention to provide a busbar that can be easily bent and thus freely deformed so as to correspond to usage environments and a battery pack including the busbar.

### [Technical Solution]

A busbar according to the present invention to accomplish the above object includes a busbar body configured in a structure in which a plurality of conductive layers is stacked, fusion portions coupled to both ends of the busbar body, the fusion portions being configured to fix the plurality of conductive layers, and an insulating layer included on at least a part of an outer surface of the busbar body, wherein the plurality of conductive layers is connected to each other only at the fusion portions.

Coupling portions may be located at both ends of the busbar body, a fastening through-hole may be included in each coupling portion of the coupling portions, and the insulating layer may cover the remaining outer surface of the outer surface of the busbar body excluding the coupling portions.

At least one through-hole or slit may be included in at least one of the plurality of conductive layers.

The at least one through-hole or the slit may be included in all of the plurality of conductive layers, and all of the conductive layers may have a same shape.

The at least one through-hole or the slit may be included in all of the plurality of conductive layers, and the area of the at least one through-hole or the slit may gradually increase from the innermost conductive layer to the outermost conductive layer among the plurality of conductive layers.

Each of the plurality of conductive layers may be configured in a grid pattern in which first lines and second lines intersect.

The plurality of conductive layers may be configured such that the thickness and spacing of the first lines and the second lines are uniform.

The thickness of the first lines and the second lines may gradually decrease and the spacing of the first lines and the second lines may gradually increase from the innermost conductive layer to the outermost conductive layer among the plurality of conductive layers.

The thickness of the conductive layer may gradually decrease from the innermost conductive layer to the outermost conductive layer among the plurality of conductive layers.

The fusion portions may be welded so as to attach and fix ends of the plurality of conductive layers.

An inflexible busbar having an insulating layer included on an outer surface of a metal bar may be coupled to at least one of a first end or a second end of the busbar body.

In addition, the present invention provides a battery pack including electrical components electrically connected to each other via the busbar. The battery pack may include the busbar and electrical components to which the busbar is coupled, wherein the busbar may be coupled to the electrical components in the state in which the busbar is bent such that at least one bent portion is formed.

In addition, the present invention may provide various combinations of the above solving means.

### [Advantageous Effects]

A busbar according to the present invention may be freely deformed so as to correspond to usage environments.

Therefore, it is possible to minimize a space required to interconnect electrical components in a battery pack, whereby it is possible to reduce an unnecessarily wasted space in the battery pack.

### [Description of Drawings]

FIG. 1 is a perspective view and a sectional view of a conventional busbar.
FIG. 2 is a perspective view and a partial enlarged sectional view of a busbar according to the present invention.
FIG. 3 is an exploded perspective view of a busbar body according to a first embodiment.
FIG. 4 is an exploded perspective view of a busbar body according to a second embodiment.
FIG. 5 is an exploded perspective view of a busbar body according to a third embodiment.
FIG. 6 is an exploded perspective view of a busbar body according to a fourth embodiment.
FIG. 7 is a perspective view and a sectional view of a busbar according to a fifth embodiment.
FIG. 8 is a partial enlarged view of FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

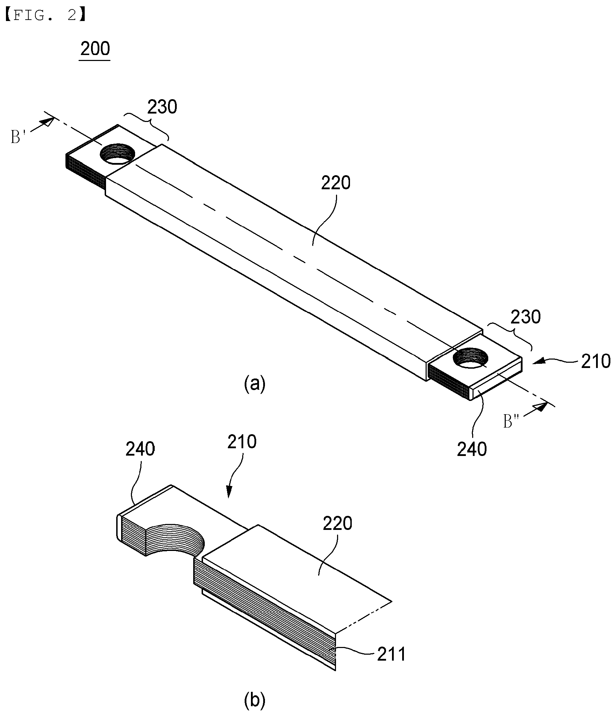

FIG. 2 is a perspective view and a partial enlarged sectional view of a busbar according to the present invention.

Referring to FIG. 2, (a) is an overall perspective view of the busbar 200, and (b) is a partial enlarged sectional view taken along line B'-B" of (a).

The busbar 200 according to the present invention includes a busbar body 210 configured in a structure in which a plurality of conductive layers 211 is stacked, wherein an insulating layer 220 is added to at least a part of an outer surface of the busbar body 210. Fusion portions 240 are coupled to both ends of the busbar body 210 in order to fix the plurality of conductive layers 211.

The plurality of conductive layers 211 is individual layers that are separated from each other in a stacked state, and is connected to each other only at the fusion portions 240. Specifically, when both ends of the plurality of conductive layers 211 are welded in the state in which the plurality of conductive layers is stacked, the fusion portions 240 are formed at the ends of the plurality of conductive layers 211, and the ends of the plurality of conductive layers are fixed by the fusion portions.

The plurality of conductive layers 211 may be made of the same material as a busbar body of a conventional bar type busbar, such as copper, aluminum, or an alloy thereof.

Coupling portions 230, each having a fastening through-hole configured to allow a fastening member, such as a bolt, to be inserted therethrough, are formed at both ends of the busbar body 210, and the insulating layer 220 is added so as to cover the remaining outer surface of the busbar body 210, excluding the coupling portions 230.

The insulating layer 220 may be configured in a structure in which an adhesive layer is applied to one surface of a substrate made of an insulating material, or may be formed in the shape of a heat-shrinkable tube. The insulating material is not particularly limited but may be at least one selected from the group consisting of, for example, silicone, polyethylene, polypropylene, rubber, ceramics, polycarbonate, and polybutylene terephthalate.

The busbar according to the present invention is configured in a structure in which the plurality of conductive layers is stacked such that the busbar can be freely deformed. At least one through-hole or slit may be formed in at least one of the plurality of conductive layers to increase flexibility of the conductive layers such that the plurality of conductive layers can be easily bent when bending is required depending on the environment where the busbar is applied. Furthermore, among the plurality of stacked conductive layers, the inner conductive layer and the outer conductive layer in the stacking direction may be different from each other in terms of the bending angle and direction. For this reason, the conductive layers may be configured to have different shapes and thicknesses depending on the position thereof.

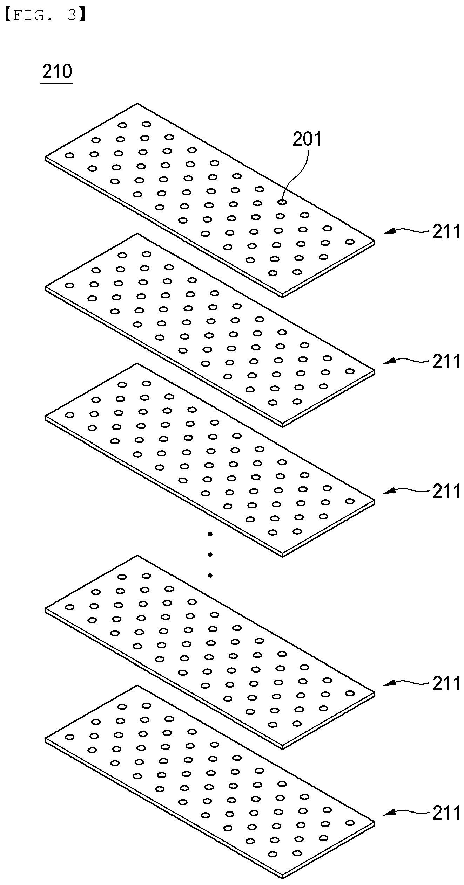

FIG. 3 is an exploded perspective view of a busbar body according to a first embodiment.

Referring to FIG. 3, the busbar body 210 is configured such that the plurality of conductive layers 211 has the same shape. Each of the plurality of conductive layers 211 has through-holes of a predetermined size uniformly distributed over the entire area thereof in a state of being spaced apart from each other by a predetermined distance.

The ductility of the busbar body 210 may be improved due to the through-holes formed in each of the conductive layers 211, whereby the busbar body may be easily deformed.

In addition, if the outer conductive layer is bent much more than the inner conductive layer in the state in which the plurality of conductive layers 211 is stacked, greater stress may be generated. However, the stress generated when the outer conductive layer is bent may be reduced by the provision of the through-holes.

Meanwhile, unlike the configuration shown in FIG. 3, the through-holes formed in the plurality of conductive layers 211 may not be aligned with each other but be offset from each other, which also falls within the scope of the present invention.

Furthermore, the through-holes may have various planar shapes, such as a polygonal shape or an oval shape, in addition to a circular shape. In a specific example, when a slit is formed in the plurality of conductive layers 211, the slit may extend in a straight shape so as to be parallel to a longitudinal direction.

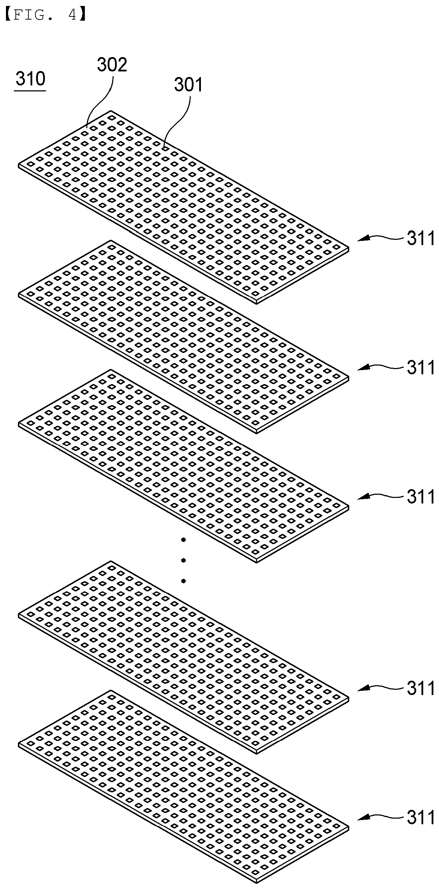

FIG. 4 is an exploded perspective view of a busbar body according to a second embodiment.

Referring to FIG. 4, in the busbar body 310, each of the plurality of conductive layers 311 is configured in a grid pattern in which first lines 301 and second lines 302 intersect. That is, the plurality of conductive layers 311 may be manufactured in a form fixed in the state in which the first lines 301 and the second lines 302, each of which is made of a linear conductive metal, are disposed in a grid pattern.

Like the busbar body 310 shown in FIG. 4, the plurality of conductive layers 311 may be configured such that the thickness and spacing of the first lines 301 and the second lines 302 are uniform, forming a structure in which identical conductive layers 311 are stacked.

Alternatively, unlike the busbar body 310 shown in FIG. 4, the thickness of the first lines 301 and the second lines 302 may gradually decrease and the spacing of the first lines 301 and the second lines 302 may gradually increase from the innermost conductive layer to the outermost conductive layer in the stacking direction among the plurality of conductive layers 311.

Greater stress may be applied to the outer conductive layer in the stacking direction during bending than the inner conductive layer. The outer conductive layers may be configured such that more empty space can be created by reducing the thickness of the first lines and the second lines and increasing the spacing of the first lines and the second lines. This may mitigate the greater stress generated when the outer conductive layer is bent, thereby reducing stress deviation between the plurality of conductive layers, and therefore it is possible to prevent separation between the conductive layers coupled to each other at the fusion portions.

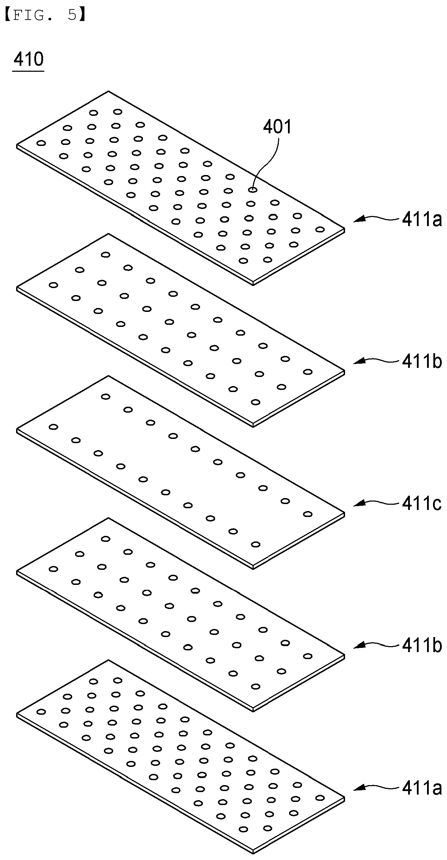

FIG. 5 is an exploded perspective view of a busbar body according to a third embodiment.

Referring to FIG. 5, the busbar body 410 is similar to the busbar body 210 shown in FIG. 3 in that through-holes are formed in all the plurality of conductive layers, but the busbar body 410 is different therefrom in the number of through-holes formed in the plurality of conductive layers.

Specifically, the area of the through-holes or slits gradually increases from the innermost conductive layer to the outermost conductive layer in the stacking direction among the plurality of conductive layers. Among the conductive layers shown in FIG. 5, the innermost conductive layer 411c has the smallest number of through-holes, the number of through-holes formed in the conductive layer 411b is greater than the number of through-holes formed in the conductive layer 411c, and the number of through-holes formed in the outermost conductive layer 411a is greater than the number of through-holes formed in the conductive layer 411b.

As the outer conductive layers among the plurality of conductive layers are formed so as to have larger numbers of through-holes, as described above, it is possible to prevent application of greater stress to the outer conductive layer than the inner conductive layer when the busbar body 410 is bent, and therefore it is possible to prevent separation between the conductive layers coupled to each other at the fusion portions.

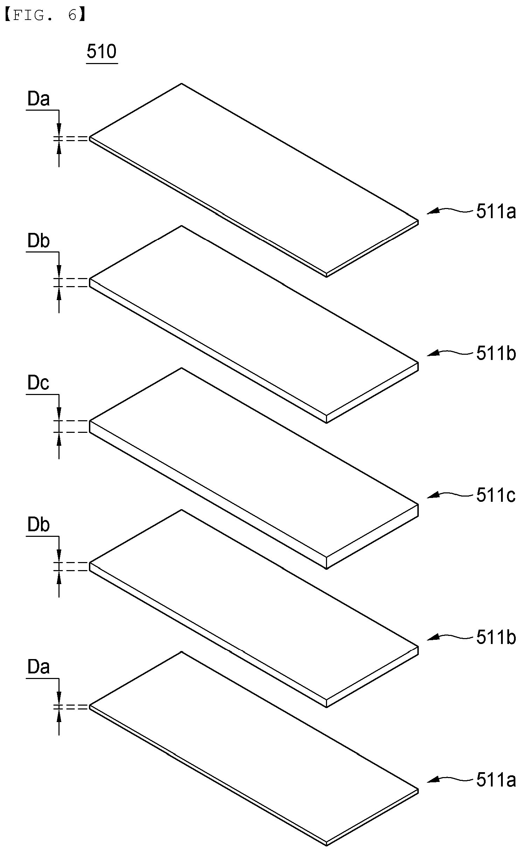

FIG. 6 is an exploded perspective view of a busbar body according to a fourth embodiment.

Referring to FIG. 6, the busbar body 510 is configured such that a plurality of conductive layers 511a, 511b, and 511c is stacked, wherein the thickness of the conductive layers gradually decreases from the innermost conductive layer 511c to the outermost conductive layer 511a in the stacking direction.

That is, the thickness Dc of the innermost conductive layer 511c is the greatest, the thickness Db of the conductive layer 511b located outside the conductive layer 511c is less than the thickness Dc, and the thickness Da of the outermost conductive layer 511a is less than the thickness Db.

As the thickness of the outer conductive layer among the plurality of conductive layers is formed so as to be less than the thickness of the other conductive layers for easier bending, as described above, it is possible to prevent application of greater stress to the outer conductive layer than the inner conductive layer when the busbar body 510 is bent, thereby reducing stress deviation between the plurality of conductive layers, and therefore it is possible to prevent separation between the conductive layers coupled to each other at the fusion portions.

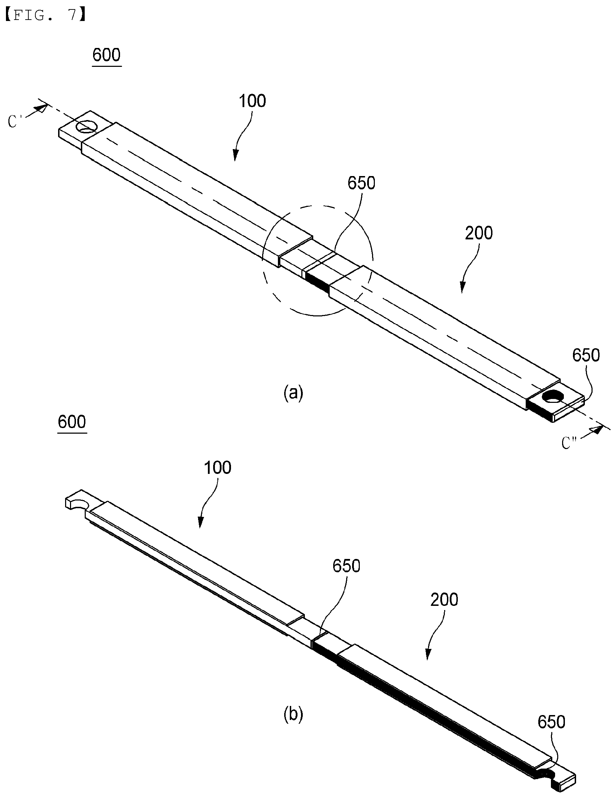

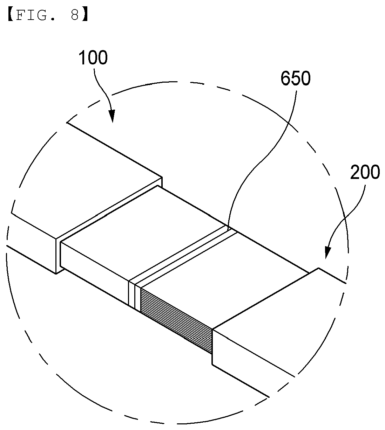

FIG. 7 is a perspective view and a sectional view of a busbar according to a fifth embodiment, and FIG. 8 is a partial enlarged view of FIG. 7.

Referring to FIGs. 7 and 8, (a) of FIG. 7 is an overall perspective view of the busbar 600, and (b) of FIG. 7 is a sectional perspective view taken along line C'-C" of (a) of FIG. 7. The busbar 600 is configured such that a busbar 100 formed in the shape of a metal bar, thus being difficult to deform, is coupled to the left side of a busbar 200 configured to be easily deformed. That is, the busbar 600 according to the present invention may be configured such that an inflexible busbar having an insulating layer added to an outer surface of a metal bar is coupled to at least one of a first end and a second end of a busbar body of the busbar 200. Therefore, unlike what is shown in FIG. 7, the busbar 100 may be coupled to the right side of the busbar 200, or the busbar 100 may be coupled to each of both ends of the busbar 200.

The busbar 100 and the busbar 200 may be joined to each other by welding, and therefore a welding joint 650 may be formed between the busbar 100 and the busbar 200.

The specific configuration in which the inflexible busbar and the flexible busbar are connected to each other while forming the welding joint 650 may include, for example, a first unit including an inflexible busbar and a flexible busbar, a second unit including an inflexible busbar, a flexible busbar, and an inflexible busbar, and a third unit including a flexible busbar, an inflexible busbar, and a flexible busbar, wherein two or more identical ones, two or more different ones, or identical and different ones may be selected from among the first to third units and may be coupled to each other.

As a hybrid type busbar 600 in which a flexible busbar, such as the busbar 100, and an inflexible busbar, such as the busbar 200, are coupled to each other is used, as described above, it is possible to obtain both the advantage of the free deformation of the flexible busbar and the advantage of excellent strength and high electrical conductivity of the inflexible busbar.

In addition, the present invention provides a battery pack including the busbar according to the present invention and electrical components to which the busbar is coupled. In the battery pack, the busbar is coupled to the electrical components in the state in which the busbar is bent such that at least one bent portion is formed. Since the busbar according to the present invention can be freely deformed, the space required for the busbar to be connected may be minimized regardless of the position and size of the electrical components disposed in the battery pack. Therefore, it is possible to dispose more battery cells in a space unnecessarily wasted as the result of using a busbar that is not bent, and therefore it is possible to manufacture a higher-capacity battery pack than a conventional battery pack of the same volume.

Those skilled in the art to which the present invention pertains will appreciate that various applications and modifications are possible within the scope of the present invention based on the above description.

### (Description of Reference Symbols)

100, 200, 600: Busbar
110, 210, 310, 410, 510: Busbar body
120, 220: Insulating layer
130, 230: Coupling portion
211, 311, 411a, 411b, 411c, 511a, 511b, 511c: Conductive layer
240: Fusion portion
301: First line
302: Second line
650: Welding joint
Da, Db, Dc: Thickness

## Claims

1. A busbar, comprising:
a busbar body configured in a structure in which a plurality of conductive layers is stacked;
fusion portions coupled to both ends of the busbar body, the fusion portions being configured to fix the plurality of conductive layers; and
an insulating layer included on at least a part of an outer surface of the busbar body,
wherein the plurality of conductive layers is connected to each other only at the fusion portions.

2. The busbar according to claim 1, wherein coupling portions are located at both ends of the busbar body, a fastening through-hole is included in each coupling portion of the coupling portions, and the insulating layer covers a remaining outer surface of the outer surface of the busbar body excluding the coupling portions.

3. The busbar according to claim 1, wherein at least one through-hole or slit is included in at least one of the plurality of conductive layers.

4. The busbar according to claim 3, wherein the at least one through-hole or the slit is included in all of the plurality of conductive layers, and all of the conductive layers have a same shape.

5. The busbar according to claim 3, wherein
the at least one through-hole or the slit is included in all of the plurality of conductive layers, and
an area of the at least one through-hole or the slit gradually increases from an innermost conductive layer to an outermost conductive layer among the plurality of conductive layers.

6. The busbar according to claim 1, wherein each of the plurality of conductive layers is configured in a grid pattern in which first lines and second lines intersect.

7. The busbar according to claim 6, wherein the plurality of conductive layers is configured such that a thickness and spacing of the first lines and the second lines are uniform.

8. The busbar according to claim 6, wherein a thickness of the first lines and the second lines gradually decreases and a spacing of the first lines and the second lines gradually increases from an innermost conductive layer to an outermost conductive layer among the plurality of conductive layers.

9. The busbar according to claim 1, wherein a thickness of the conductive layer gradually decreases from an innermost conductive layer to an outermost conductive layer among the plurality of conductive layers.

10. The busbar according to claim 1, wherein the fusion portions are welded so as to attach and fix ends of the plurality of conductive layers.

11. The busbar according to claim 1, wherein an inflexible busbar having an insulating layer included on an outer surface of a metal bar is coupled to at least one of a first end or a second end of the busbar body.

12. A battery pack comprising:
the busbar according to any one of claims 1 to 11; and
electrical components coupled to the busbar,
wherein the busbar is coupled to the electrical components in a state in which the busbar is bent such that at least one bent portion is formed.
